# EUROPEAN PATENT APPLICATION

(11) **EP 4 651 414 A1**
(43) Date of publication of application: **19.11.2025**
(21) Application number: 24176744.1
(22) Date of filing: 17.05.2024
(51) Int. Cl.: H04L 1/1867, H04L 69/28, H04W 4/70

(54) **INTERNET OF THINGS DEVICE AND NODE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP); KANG, Yang, 469332 Singapore (SG); LI, Yihui, 469332 Singapore (SG)
(74) Representative: Grünecker Patent- und Rechtsanwälte PartG mbB

(57) **Abstract**

The present disclosure relates to an Internet of Thing, loT, device, comprising the following. A transceiver which, in operation, receives a message from a node, and a circuitry, which in operation, starts a barrier timer for a barrier time period on the basis of the received message for determining during the barrier time period whether or not sending a response to the node.

## Description

### BACKGROUND

### 1. Technical field

The present disclosure relates to an loT device and its communication with a node, for example, a base station or an intermediate node connected to a base station.

### 2. Description of the Related Art

The Internet of things (IoT) market is a major source of revenue for future wireless technology and is a steadily growing market. Building, commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with specifically designed new operation states. Further, due to the lack or RRC states like CONNECTED, IDLE, or INACTIVE, a contention-based channel access may be required to initiate communications. However, the number of A-loT devices within a coverage range of a node could be large, which results in excessive attempts for channel access that cause collisions and performance degradation. In addition, it might be required for a node to determine a proximity of an A-loT device.

### SUMMARY

One non-limiting and exemplary embodiment facilitates an Internet of Things, loT, device communicating with a node.

In an embodiment, the techniques disclosed herein feature: An Internet of Things, loT, device, comprising a transceiver which, in operation, receives a message from a node, and a circuitry, which in operation, starts a barrier timer for a barrier time period on the basis of the received message for determining during the barrier time period whether or not sending a response to the node.

In another embodiment, the techniques disclosed herein feature A method comprising the following steps performed by an Internet of Thing, loT, device:
receiving a message from a node, and
starting a barrier timer for a barrier time period on the basis of the received message for determining during the barrier time period whether or not sending a response to the node.

In another embodiment, the techniques disclosed herein feature: A node, for example a base station or an intermediate node connected to a base station, comprising a transceiver which, in operation, transmits a message to an Internet of Thing, loT, device and a circuitry, which in operation, starts a barrier timer for a barrier time period on the basis of the transmitted message for determining during the barrier time period whether or not receiving a response from the loT device.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: illustrates a node-A-loT device topology;
- **Fig. 3**: illustrates another node-A-loT device topology;
- **Figs. 4, 9, and 13**: illustrates a situation, wherein a proximity of an loT device may be determined by a node;
- **Fig. 5**: illustrate message schemes;
- **Figs. 6 to 8, 10, 12, and 14 to 16**: illustrate message schemes with a barrier timer according to embodiments;
- **Fig. 11**: illustrates the steps of a method performed by an loT device according to an embodiment of the disclosure;
- **Fig. 17**: illustrates a general, simplified and exemplary block diagram of an A-loT device and a node;
- **Fig. 18**: illustrates functional structure of the circuitries pertaining to the A-loT device and the base station;
- **Fig. 19**: illustrates a flow diagram for the A-loT device according to an exemplary embodiment of the present disclosure;
- **Fig. 20**: illustrates a flow diagram for the node according to an exemplary embodiment of the present disclosure;
- **Fig. 21**: is a signaling diagram illustrating an exemplary exchange between an A-loT device and a node according to an exemplary embodiment of the present disclosure; and
- **Fig. 22**: shows exemplary functional split options in 5G O-RAN.

### DETAILED DESCRIPTION

### 5G NR system architecture and protocol stacks

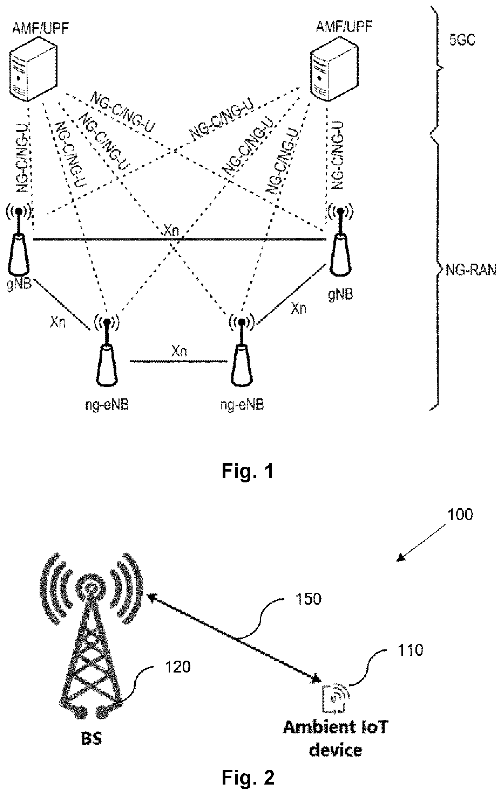

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

### Ambient IoT Device

An ambient loT device (A-loT device) is an energy harvesting device or terminal having a small battery or having no battery. An A-loT device may be an ultra-low complexity device with ultra-low power consumption for very-low end loT applications. Examples for A-loT devices include without any limitation wearables, smart home devices, automotive devices, sensors, smart keys, healthcare devices, etc.

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

### Topologies

Particularly, two different topologies are exemplarily considered in this disclosure. In a first topology 100 as illustrated in **Fig. 2**, an A-loT device 110 directly and bidirectionally communicates with a base station 120 over a wireless channel 150. In general, the A-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

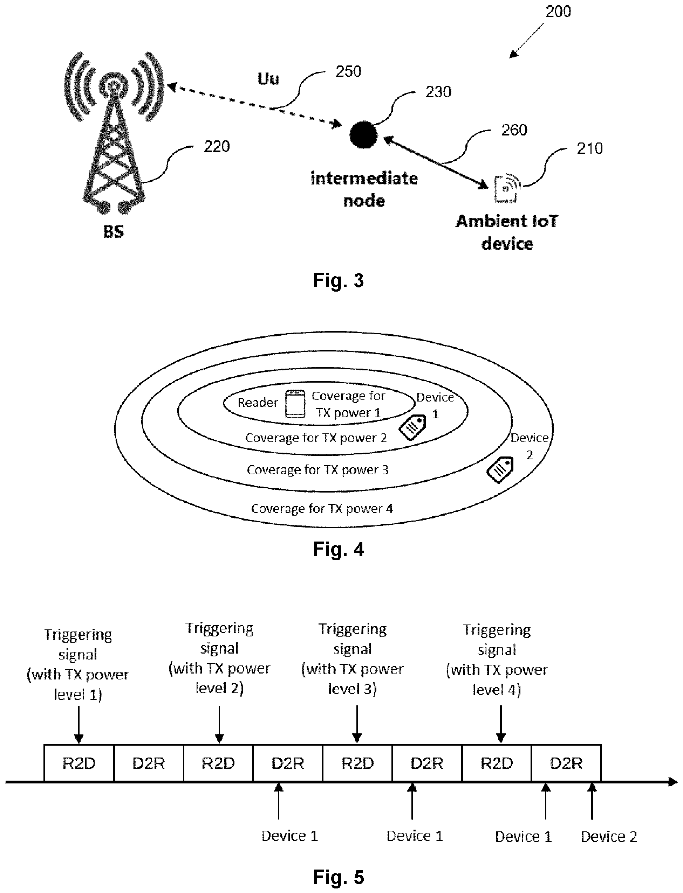

In a second topology as illustrated in **Fig. 3**, an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-IoT device 210 and transfers the user data and/ signaling between the A-loT device 210 and the base station 220. Traffics are A-loT device terminated or A-loT device originated. The base station 220 may communicate with the intermediate node 230 via a first interface 250. In **Fig. 3**, this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

### Further improvements

**Figs. 4** and **5** illustrate a situation, wherein a proximity of an loT device may be determined by a node and a corresponding triggering scheme, wherein an a second loT device 2 further away from a reader than a first loT device 1 may not respond to a message (also referred to as trigger signal or triggering signal) transmitted with a low signal strength TX1, due to the message not being successfully received by the loT device 2. Specifically, in the illustrated example, the node transmits a plurality of messages, here indicated as TX power level 1 to TX power level 4, wherein each trigger signal has a different power level. In a first message, a transmission (TX) power is used, which may be a low TX power level. In a further trigger signal, a second TX power is used, which may be higher than the TX power of the first message. Respective coverage areas of the messages with TX power 1 to TX power 4 are illustrated in **Fig. 4**. As it is apparent from **Fig. 4****,** only the loT device 1 within the coverage area for a message with TX power 2 may respond to the message having TX power 2. Therefore, the node may determine a distance and/or proximity of respective loT devices, if a response signal is received or not. In particular, the loT device 2 within the coverage area for the trigger signal with TX power 4 may respond to a message with TX power level 4, allowing the node to determine respective distances and/or proximities.

**Fig. 5** illustrates a triggering scheme. Channels (resources or slots of a channel) are indicated as R2D for a channel for transmission of signals from a node to an loT device (reader to device, R2D) and as D2R for a channel for transmission of signals from an loT device to a node (device to reader, D2R). Said channels may also be referred to as PRDCH (Physical Reader to Device Channel) and PDRCH (Physical Device to Reader Channel), respectively. Through the R2D channel, the loT device receives a triggering signal. After having received the message, the loT device may transmit a response to the node via the D2R channel.

As shown in this example in Figs 4 and 5, the reader transmits four messages with different TX power levels 1 to 4. This arrangement enables the proximity determination on detection of a response from the A-loT device. In more detail, to determine the approximate location and/or distance of A-loT devices 1 and 2, the reader (which is an entity communicating with the A-loT device, e.g., a gNB, UE, or other type of devices) sends messages such as triggering signals for proximity determination with different TX power levels. The A-loT device that receives the triggering signal, sends a response accordingly.

For example, as shown in Figs. 4 and 5, for the first message, no response will be received because none of the loT devices 1 and 2 is located in the coverage for TX power 1. For the following triggering signals (with TX power 2, 3, and 4), the loT device 1 receives the messages and sends responses because loT device 1 is located in the coverage for TX power 2. The loT device 2 responds to the (last) message with TX power 4 because loT device 2 is located in the coverage for TX power 4.

The problem is that the nearby loT device 1 sends redundant responses to the reader, which could cause collisions and increase the power consumption of the loT device 1. The problem of sending redundant responses also exists in other cases, such as contention-based channel access, where the transmissions of the nearby loT device 1 might block the transmissions of the distant loT device 2.

The technical problem to be solved is to reduce the power consumption, to avoid collisions of the responses, to ensure the reliability of the proximity determination, and to increase the flexibility of the proximity determination.

The inventors have therefore identified the possibility of providing improved transmission methods to avoid one or more of the disadvantages described above. The present invention relates to various solutions and variants for such improved transmission methods.

### Embodiments

The present disclosure addresses the integration of A-loT devices into communication networks, particularly, 5G and future technologies.

It is noted that the present disclosure is not limited to A-loT devices. It may be also applicable to any other kind of loT devices or to other devices with possibly substantial power limitations. For example, the terms loT device and A-loT device are used interchangeably in this disclosure.

In the following, a node communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a **mobile station** or **mobile node** or **user terminal** or **user equipment (UE)** or **loT device** or A-**loT device** is a **physical entity** (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" or "**node**" or "**reader**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, RRC etc. (see above background discussion).

As used herein, the term "**message**" specifically refers to a formatted and standardized unit of data transmission that carries encapsulated information, including trigger signals (also referred to herein as triggering signals) and data signals between devices or systems within a network. In the context of loT or communication systems, a message may refer to a trigger signal that initiates a specific action or process and a data signal that carries the actual information or data payload. The trigger signal within the packet prompts a response or action at the receiving end, such as triggering a specific process, such as a proximity response from the loT device to the node that triggers, initiates data transmission, or triggers a sensor connected to the loT device. The data signal contains the data or information to be communicated, such as sensor readings, commands, status updates, or other relevant information. In addition, the message may contain control information such as source and destination addresses, sequence numbers, error detection codes, and other metadata. This control information ensures that the message is routed and processed correctly and that data integrity is maintained during transmission.

As used herein, the term "**barrier timer**" refers to a timer for a barrier where threads, such as a response to a trigger signal, wait until a specified condition is met before proceeding or threads are skipped. As used here, a thread can be a basic unit of execution within a process, such as an action initiated by a trigger signal. In operation, the barrier timer starts and skips or pauses execution of the thread until either a barrier time elapses or a specified event occurs. Once the barrier time has elapsed or the condition has been met, the barrier timer does not block thread execution. Additionally, or alternatively, waiting threads are executed once the barrier time elapses or the condition is satisfied.

As used here, the term "**barrier time period**" refers to the length of time that a barrier remains active on the network. During a barrier time period, threads or processes are skipped or paused.

As used herein, the term "**response**" refers to a reply or reaction provided by a receiving device or system in response to a received message, such as a trigger signal or data signal. It represents the acknowledgement or response sent back to the sender to indicate the outcome of the received message. Responses are used to acknowledge receipt, provide requested information, or indicate the success or failure of an operation.

The present disclosure relates to an A-loT device, a base station, and an intermediate node connected to a base station, methods of communication between the A-loT device and the base station and the A-loT device and the intermediate node.

Different and exemplary implementations of the improved transmission procedure are explained in the following. For the explanation of the different implementation, some exemplary and simplifying assumptions are made.

According to one exemplary assumption, the message is a trigger signal. For example, the loT device operates a proximity determination, according to which loT device sends a response to the trigger signal. The solutions and their variants and implementations are primarily and exemplarily described on the basis of such a trigger signal, according to which trigger signal and the corresponding response are communicated between the loT device and the node.

However, this is only an example of a scenario to which the solutions can be applied. The solutions can also be applied to other scenarios than trigger signals for proximity determination, e.g. in scenarios in which messages are exchanged with a varying transmission power. Other scenarios are for example the exchange trigger signals for data transmission or messages such as broadcasts or unicasts.

However, for the sake of simplicity, it is assumed in the following that the message is a trigger signal, in particular for proximity determination.

### Solution -Consider barrier timer for a response

According to a first solution, the loT device starts a barrier timer for a barrier time period on the basis of the received message for determining during the barrier time period whether or not sending a response to the node.

It is provided an (ambient) Internet of Things, A-loT, device, comprising a transceiver which, in operation, receives (is configured to receive) a message (e.g. a trigger signal, data or an acknowledgement signal) from a node, and a circuitry, which in operation, starts (is configured to start) a barrier timer for a barrier time period on the basis of the received message for determining during the barrier time period whether or not sending a response (e.g. to the message or a later message) to the node.

It is further provided a node, comprising a transceiver which, in operation, transmits a message to an Internet of Thing, loT, device and a circuitry, which in operation, starts a barrier timer for a barrier time period on the basis of the transmitted message for determining during the barrier time period whether or not receiving a response from the loT device.

In the situation discussed in above **Fig. 4**, the loT device considers in the message scheme shown in **Fig. 5**, a not shown barrier timer, which is started based on the received message, for example based on any of the triggering signals. The barrier timer facilities to reduce responses and collisions.

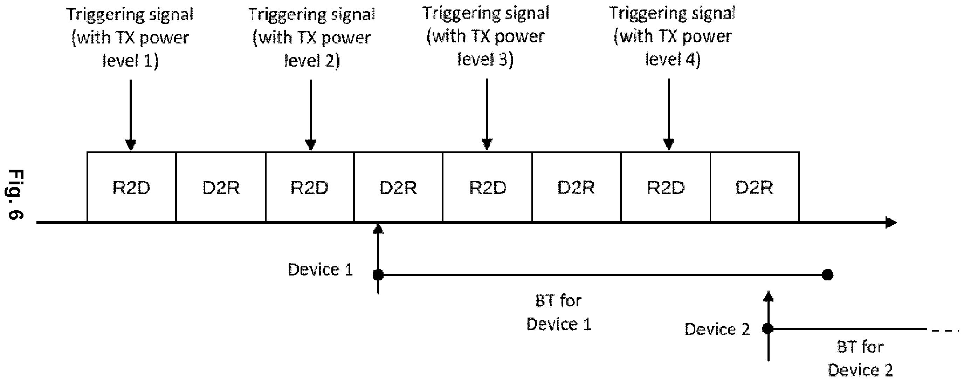

Various examples with such a barrier timer are shown in **Figs. 6 to 8**, 10, 12, and 14 to 16 which illustrate message schemes in line with **Fig. 5** and a barrier timer. The following implementations discuss aspects of the message scheme.

### 1^{st} Implementation-Starting barrier timer

The circuitry, in operation, starts the barrier timer in response to at least one of the events discussed in following variants. Starting the barrier timer refers to the time, when the barrier starts.

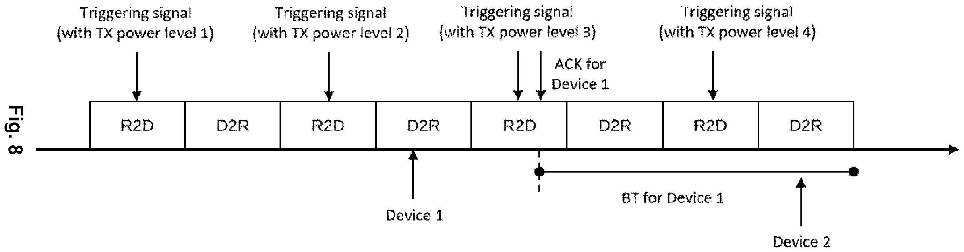

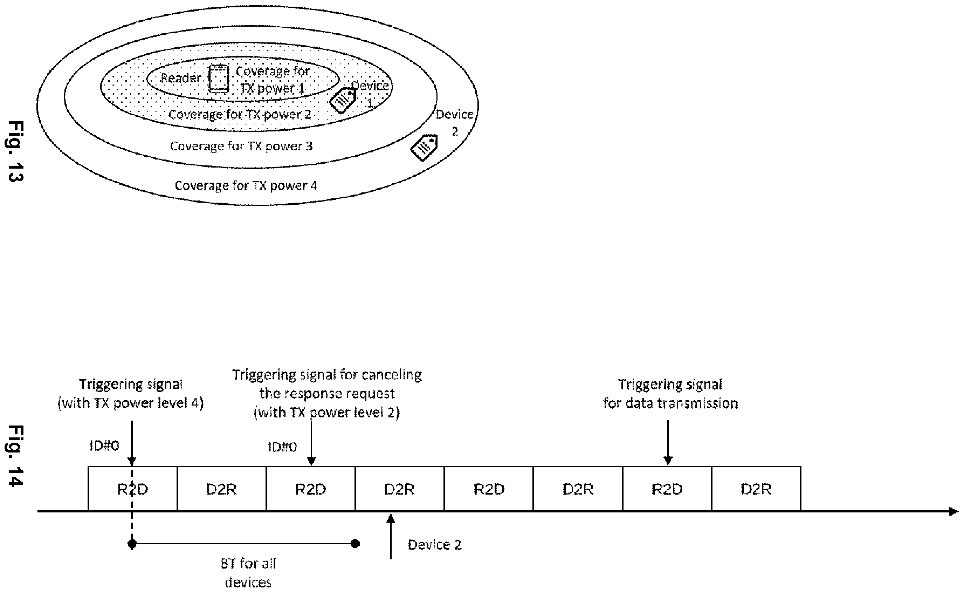

According to a first variant, the barrier timer starts when the message is received. For example, as shown in Fig. 14, the barrier timer starts before sending, by the transceiver, in operation, a response to the message, when the message is received, i.e., the start of the barrier timer is just after (upon) the message is received, i.e., without any delay. This facilitates reducing the number of responses. A further condition may be considered, as shown in Fig. 8. The message can be a specific message, e.g. an acknowledgement message for acknowledging the response to the message. This facilitates increasing the reliability. Alternatively, the barrier timer starts at a predefined next opportunity, e.g. at the next change from R2D to D2R. Notably, as shown in this variant, no response to the message for starting the barrier timer is transmitted to the node.

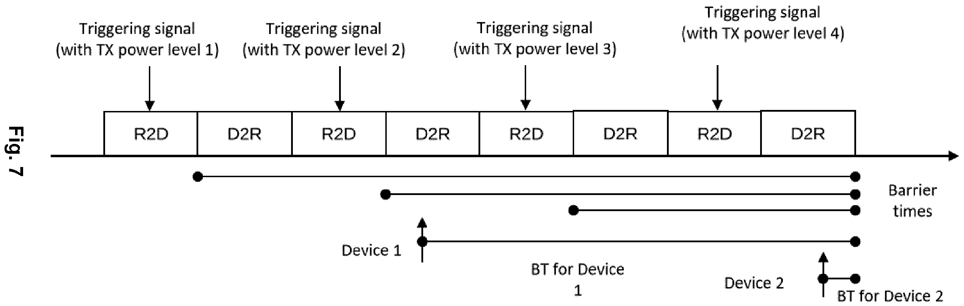

According to a second variant, the barrier timer starts at a specific channel position. For example, at a beginning time of a channel for communicating data to the node. For example, as shown in Fig. 7, the channel may be a next D2R or R2D channel following the R2D channel receiving the message. The beginning time of the channel can be determined based on a configuration of the loT device or triggered by receiving the message. According to a further example, the barrier timer starts at an end time of a channel for communicating data to the node. The channel may be, for example, the R2D channel receiving the message. The end time of the channel can be determined based on a configuration of the loT device or by receiving the message. This facilitates adjusting the barrier time duration to the message scheme.

According to a third variant, the barrier timer starts in response to sending a response to a message. For example, as shown in Figs. 6, 7, 12, and 15, the barrier timer will start just after (upon) sending the message to the first received message. This facilitates reducing the number of responses.

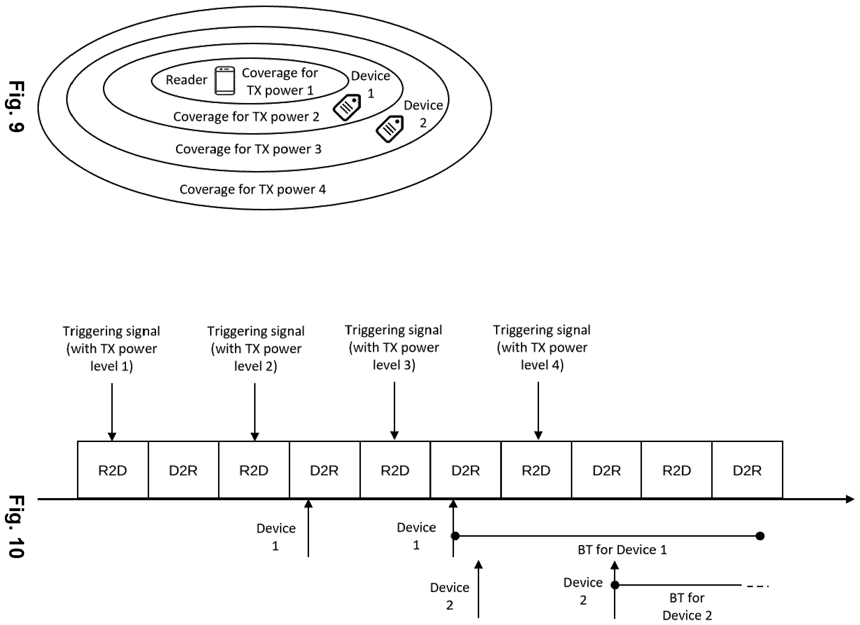

According to a fourth variant, the barrier timer starts in response to a plurality of events. For example, as shown in Fig. 8, the loT device starts the barrier timer in response to receiving a plurality of messages. In particular, a number of the plurality of messages to start the barrier timer is pre-configured for the loT device or indicated by at least one of the plurality of messages. Alternatively, the as shown in Fig. 10, the loT device starts the barrier time in response sending a plurality of responses to a plurality of received messages. In particular, a number of the plurality of responses can be pre-configured for the loT device or indicated by at least one of the plurality of messages. This facilitates increasing the reliability.

### 2^{nd} Implementation-Barrier time period

The circuitry, in operation, determines one or more barrier time periods based at least one of the conditions discussed in following variants. For variants for starting the barrier timer is referred to the above 1^{st} implementation, which can be combined with the 2^{nd} implementation.

The barrier time period can be based on a configuration of the loT device. As for example shown in Figs. 6 and 14, the barrier time period can be a fixed value that is pre-configured. The barrier time period facilitates that the device does not send redundant responses, for example during a proximity determination scheme during which similar messages with a same triggering signal type are transmitted.

Further, as shown in Fig. 7, the barrier time period can depend on a parameter of the received message. This parameter can be implicitly derived from the signal, e.g. a signal strength of the message. Additionally, the barrier time period can depend on an explicitly received parameter, such as system parameter. For example, the message can comprise a traffic information, which is received from the node, for identifying a communication traffic in a system covered by the node. Additionally or alternatively, the message can comprise a density information, which is received from the node, for identifying a number of loT devices in a system covered by the node. This facilitates using different barrier times to manage sending different message or signals.

Additionally or alternatively, the barrier time period can be signalled, as shown in Fig. 8, with an acknowledgement message received from the node for acknowledging the response to the message. Further, as shown in Fig. 10, the barrier time period can depend on a number of received messages. This facilitates increasing the reliability.

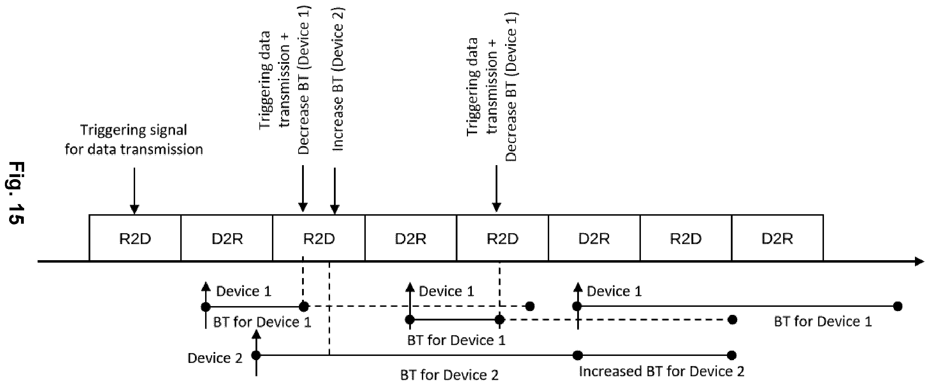

The loT device can be pre-configured or configured with different barrier time periods, as for example shown in Figs. 7 and 15. For example, the configuration may be related to at least one of predefined parameters such as a message identifier of the message identifying the message, a node identifier of the message identifying the node sending the message, a data type indicating a type of data transmitted by the message, a modulation and coding scheme (MCS) used for the message, and a band width, BW, used for the message. This approach facilitates to reduce the overhead for carrying the barrier time period. It also facilitates to control the traffic load based on the number of devices in the system.

### 3^{rd} Implementation-Not sending a response

The circuitry, in operation, may determine to not send a response. For example, the circuitry determines to not respond to the received message for starting the barrier timer. Further, the circuitry may determine to not respond to a later message, for example received during the barrier time period. In other words, this decision may be taken after starting the barrier timer. For starting the barrier timer is referred to the above 1^{st} implementation and for the determination of the duration is referred to the above 2^{nd} implementation. The variants and examples of the 1^{st} and 2^{nd} implementation can be combined with the 3^{rd} implementation.

According to a first variant, the circuitry determines to not send a response after starting the barrier timer. In general, the circuitry may not send any response during the barrier timer is running. However, further criteria may be considered during the barrier timer is running.

In particular, according to an option of the first variant, the circuitry may determine whether or not to respond to a later message based on a not-response criterion received, by the transceiver, during the barrier time period. This facilitates reducing the number of responses, namely reducing the responses to later messages as for example in the proximity detection with a message scheme of increasing power level.

For example, **Fig. 6** shows an example according to this first variant. The situation discussed in above **Fig. 4**. The node transmits, via an R2D channel (leftmost slot illustrated in the figure), a trigger signal having TX power level 1. Hence, none of the loT devices 1 and 2 sends in the following D2R channel a response, because none is located within the coverage area. Then, the node transmits, via the following R2D channel, a trigger signal having TX power level 2. Hence, only loT device 1 sends in the following D2R channel a response, because it is located within the coverage area. Further, the loT device 1 starts the barrier timer when it responds to this triggering signal. As discussed above, different barrier time periods can be defined depending on a type the triggering signal. For example, the barrier timer period may last for the duration of five channels. Then, the node transmits, via the following R2D channel, a trigger signal having TX power level 3. Hence, only loT device 1 could send in the following D2R channel a response. However, loT device 1 decides not to send a response because barrier timer is running.

Further, the loT device 1 may take the decision whether to respond or not may depend on a not-response criterion according to the option of the first variant. The not-response criterion can be a criterion for comparing a type of the message and a type of the later message. As used herein, the type indicates at least one of a message identifier of the message identifying the message, a node identifier of the message identifying the node sending the message, a data type indicating a type of data transmitted by node, a signal strength of the received message. The circuitry, in operation, determines to not respond to the later message if comparing the type of the message and the type of the later message meets the not-response criterion. For example, when the device sends the response to the triggering signal for determining proximity, the loT device 1 will not send further responses to the later received massages for same type of trigger signals, in the discussed example a triggering signal for determining proximity, during the barrier time. For example, the criterion may be based on a message ID, which identifies messages for proximity determination. Additionally or alternatively, this may be based on a condition that the later message has triggering signal with a higher TX power level than the message for starting the barrier timer.

Further, as shown in Fig. 6, the node transmits, via the following R2D channel, a trigger signal having TX power level 4. Hence, both loT devices 1 and 2 could send in the following D2R channel a response. However, only loT device 2 sends a response and may start upon sending a barrier times.

In the example discussed with Fig. 6, a specific barrier time is pre-configured for the triggering signal for proximity determination. When the device detects the triggering signal and sends a response, it would not respond to the proximity triggering signal for the specified barrier time. This facilities not sending redundant responses to the same triggering signal type, such as proximity determination.

**Fig. 7** shows a similar situation as explained above in **Fig. 6**. As discussed above, the barrier time duration can be indicated by the triggering signal. For example, the triggering signal indicates when the barrier timer starts and when the barrier timer ends. As discussed above, the barrier time duration can be considered from the reception time of the triggering signal or, as shown in Fig. 7, from the start/end of the next D2R instance. Further, as shown in Fig. 7, the type of trigger signal may indicate a duration of the barrier timer duration. For example, as shown in Fig. 7, this may be based on a condition that a triggering signal with a lower TX power level has a longer duration than a signal with a higher TX power level.

In the example shown in Fig. 7, the barrier timer is applicable for the triggering signals with the same type. For instance, as shown in Fig. 7, loT Device 1 starts the barrier timer after sending the response to the triggering signal with TX power level 2. Hence, it would not send response to the following triggering signal for proximity determination. However, it could send a response to other triggering signal types, for instance, to initiate the D2R data transmission. This different barrier times facilitates to manage sending different message or signals. Also, the barrier time period can be based on the traffic in the system and/or the number of devices in the system.

In line with the first variant, the not-response criterion can be a not-response criterion for an indication comprised in the later message. For example, the later message may comprise indication to not send a response to the later message under certain circumstances. For example, the later message can have a TX power level 2 and this barrier timer indicates to only respond to messages with a higher TX power level. To further increase the reliability, according to a not shown example, the not-response criterion can be a criterion for a number of received messages or sent responses.

A further example according to the first variant is shown in **Fig. 8**. Fig. 8 shows a similar situation as explained above in Figs. 6 and 7. As discussed above, the barrier time could be indicated by the node, referred to as reader in Fig. 8, along an acknowledgement message received from the node for acknowledging the response to the message. The node transmits, via an R2D channel (leftmost slot illustrated in the figure), a trigger signal having TX power level 1. Hence, none of the loT devices 1 and 2 sends in the following D2R channel a response, because none is located within the coverage area. Then, the node transmits, via the following R2D channel, a trigger signal having TX power level 2. Hence, only loT device 1 sends in the following D2R channel a response, because it is located within the coverage area. Different to Fig. 6, the loT device 1 does not start the barrier timer when it responds to the triggering signal with TX power level 2. Thus, the node transmits, via the following R2D channel, a trigger signal having TX power level 3 and an acknowledgement message for loT device. Based on this acknowledgement message, the loT device 1 starts barrier timer. Hence, the loT device 1 will not respond to trigger signals having TX power level 3 and 4. In other words, if a message/response is acknowledged by the reader, the reader can indicate the barrier time to the device for the similar message/triggering signal type. In this example, when the reader receives a response from the loT device 1, it will send an acknowledgement to the device and indicate the barrier time duration. The device applies the indicated barrier time and would not send responses to the following triggering signals. This approach facilitates that a response form the loT device is received without sending redundant responses.

An alternative example to increase reliability is shown in **Figs. 9 to 11**. The situation discussed in above **Fig. 9**, which is the same as in Fig. 4 with the difference that loT device 2 is located in the coverage for TX power level 3. The message scheme is shown in Fig. 10.

The node transmits, via an R2D channel (leftmost slot illustrated in the figure), a trigger signal having TX power level 1. Hence, none of the loT devices 1 and 2 sends in the following D2R channel a response, because none is located within the coverage area. Then, the node transmits, via the following R2D channel, a trigger signal having TX power level 2. Hence, only loT device 1 sends in the following D2R channel a response, because it is located within the coverage area. Different to the situation in Figs. 6 and 7, the loT device 1 does not start the barrier timer when it responds to first triggering signal. As discussed above, different starting conditions for time barriers can be defined. Alternatively or additionally to defining a starting time, the loT device may use a number of received/transmitted messages. In the example shown in Fig. 10, the loT device starts the barrier timer on the condition that two trigger signals have been received and the loT device may not-response if the barrier timer is running. In other words, the barrier timer could be considered based on a number of transmissions/responses, which the number could be pre-configured or indicated as discussed above. In particular, in line with the example discussed in Figs. 6 and 7, this facilitates to improve the reliability. In the example in Fig. 10, the loT device starts the barrier timer after sending the number of defined transmissions or responses. In this example, the loT devices 1 and 2 are configured to start the barrier timer after sending 2 responses to triggering signals for proximity determination. The loT device 1 responses to triggering signals with TX power levels 2 and 3, and then starts the barrier time. So, it will not respond to the following triggering signals. The loT device 2 responses to triggering signals with TX power levels of 3 and 4 and then starts the barrier timer. This facilitates to ensure a desired target reliability.

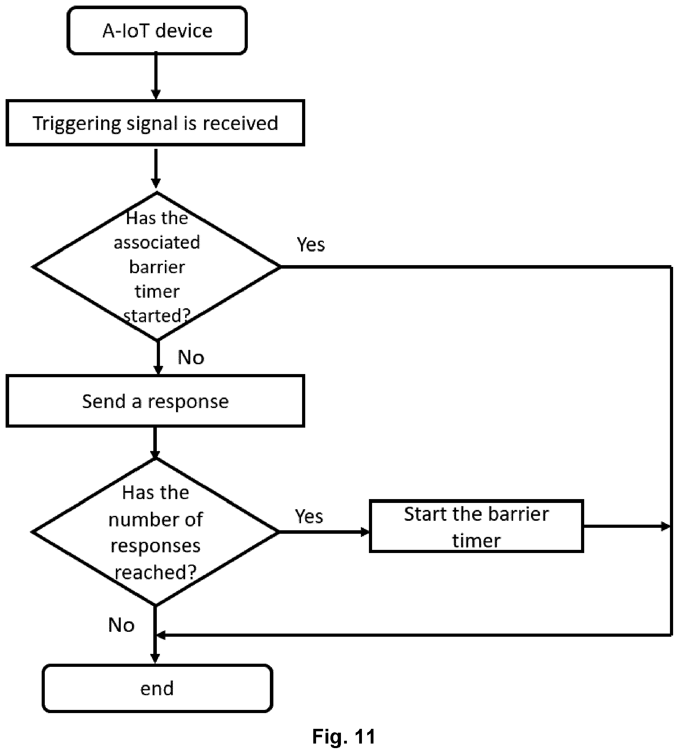

The corresponding flow chart is shown in Fig. 11. In particular, the loT device starts the flow with receiving a trigger signal. Then, the loT device determines if the associated barrier timer has started. If Yes, the process ends. If No, the process proceeds with sending a response. Then, the process proceeds with determining if the number of responses has reached. If Yes, the process proceeds with starting the barrier timer. If No, the process may in a not shown step increase the counter and then process ends.

A second variant of the 3^{rd} implementation relates to starting the barrier timer before sending, by the transceiver, in operation, the response to the message. As discussed in the first variant, the circuitry may not send any response during the barrier timer is running. Thus, according to the second variant, the loT device may determine not sending during the barrier time period the response to the message based on which the barrier timer starts. In other words, the barrier time can be considered before sending any response.

Such a solution enables to discover devices far away. An example is shown in **Figs. 13 and 14****.** The situation discussed in above **Fig. 13**, which is the same as in Fig. 4. For illustration purpose, the coverage area for TX power level 1 and 2 are shaded thereby indicating that these coverage areas are not subject of the proximity determination. The message scheme in **Fig. 14** differs from the message scheme in Fig. 5 in that the triggering signals for the proximity determination are in descending orders, i.e. starting with TX power level 4.

In this example, the reader fist sends a triggering signal with TX power level 4. This triggering signal indicates a barrier time before each device can send a response. This message is detected by all devices in the coverage area, i.e., loT devices 1 and 2. In other words, the circuitries of all devices determine not sending the response to the message based on which the barrier timer starts. The reader then sends a triggering signal for canceling the response request for the proximity determination with a TX power of level 2. This signal is detected in a shorter range. The loT device 1 detects this signal, while the loT device 2 cannot detect the signal. The circuitry of the loT device 1 that determines, based on the later message received, i.e. the trigger signal with TX power level 2, to not send the response to the message based on which the barrier timer starts and the response to the later message. This determination may be based on further conditions. For example, the circuitry determines to not send the response to the message for starting the barrier timer in case a signal strength of the message for starting the barrier timer is higher than a signal strength of a later message received during the barrier time period. Hence, loT device 1 does not transmit a response to the previous triggering signal (after the barrier time ends). IoT device 2 will send a response to the first triggering signal when the barrier time ends.

Thus, the barrier time enables to transmit the triggering signals for the proximity determination in ascending or descending orders. Further, sending the triggering signals for the proximity determination with a descending order and considering the barrier timer enables to only trigger a subset of devices.

### 4^{th} Implementation-Modifying the barrier time period

The circuitry, in operation, may determine to modify the barrier timer. For example, the circuitry determines to modify the barrier time duration by overriding the barrier time period, e.g. restart or extend the barrier timer, and/or to end, i.e. terminate, the barrier timer. For starting the barrier timer is referred to the above 1^{st} implementation and for the determination of the duration before modifying the barrier timer duration is referred to the above 2^{nd} implementation. For determining not sending a response is referred to the 3^{rd} implementation. The variants and examples of the 1^{st} to 3^{rd} implementation can be combined with the 4^{th} implementation.

In particular, the circuitry determines, after starting the barrier timer, based on a modifying criterion whether or not to modify the barrier time period, wherein the barrier time period is modified by one overriding barrier time period and/or terminating the barrier time period.

According to a variant, the modifying criterion can be a modifying criterion for a type of a later message received, by the transceiver, during the barrier time period. As discussed above, the type indicates at least one of a message identifier of the message identifying the message, a node identifier of the message identifying the node sending the message, a data type indicating a type of data transmitted by the message, a signal strength of the message.

Then, the circuitry, in operation, determines to modify the barrier timer if the type of the later message comprised in the later message meets the modifying criterion.

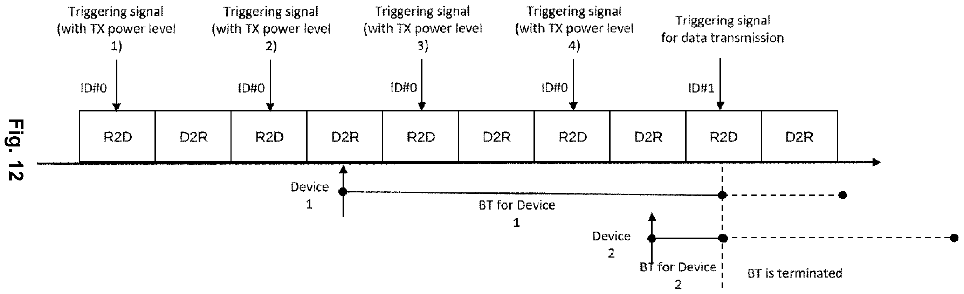

**Fig. 12** shows an example according to this implementation. The situation is the same as in above discussed **Fig. 6**. Additionally, as shown in Fig. 12, each triggering signal comprises an ID number ID#. In this example, the reader sends the triggering signals for the proximity estimation with different power levels. The triggering signals for the proximity estimation are sent with the ID#0.

As discussed with Fig. 6, loT-device 1 detects the triggering signal with TX power level 2 and sends a response. IoT-device 2 detects the triggering signal with TX power level 4 and sends a response.

Then, after the proximity determination, in the example in Fig. 12 after the triggering signal with the TX power level 4, i.e. the highest power level, the node transmits a triggering signal with a different ID#, here ID# is 1. In particular, the reader sends another triggering signal for the data transmissions with ID#1. loT devices 1 and 2 that receive this triggering signal with a different ID#, and they will restart/terminate the barrier timer. The loT devices can initiate the data transmission, if needed. This termination based on considering a type of a later message received facilities using one single barrier timer for different message IDs.

In line with the variant, the modifying criterion can be a modifying criterion for an indication comprised in a later message received, by the transceiver, during the barrier time period. For example, the later message may comprise indication to modify by overwriting or terminating the barrier timer. Additionally or alternatively, modifying criterion can be modifying criterion for a number of messages received by the transceiver. Thus, after having not responded to a plurality of messages, the message may terminate the barrier timer or extend it.

### 5^{fh} Implementation-Triggering signal for data transmission

The above 1^{st} to 4^{th} implementations have been described by way of examples using describing in particular a triggering signal for proximity determination. The message may not necessarily be a trigger signal for a proximity measurement but can be also a trigger signal for a data transmission, a broadcast signal, a unicast signal, and an acknowledgement message.

Fig. 15 is an example according to the implementation using a triggering signal for data transmission. The node transmits, via an R2D channel (leftmost slot illustrated in the figure), a trigger signal for data transmission. The reader initially transmits a triggering signal for triggering the data transmissions. Hence, the loT devices 1 and 2 initiate the data transmission, i.e. send in the following D2R channel a response. Notably, the triggering signal for data transmission may have at least one of a maximal signal strength and a message ID.

As discussed above with reference to the 1^{st} and 2^{nd} implementation, the barrier timer may be started based on various conditions and the duration may be determined based on various conditions. For example, as shown in Fig. 15, the same barrier time duration is set for data transmission for both loT devices 1 and 2. Both loT devices 1 and 2 initiate the data transmissions, and upon initiating data transmission, start the barrier timer.

The reader is able to decode both messages from the devices. However, the reader identifies a high priority for the data transmission of loT device 1. Hence, it will send an acknowledgment or triggering signal in the next R2D channel for device 1 to shorten/terminate the barrier time as discussed with the 4^{th} implementation. Device 2 may not send a further response to this triggering signal because the barrier time has not been shortened. Conditions for not sending a response have been discussed with the 3^{rd} implementation. Additionally or alternatively, as shown in Fig. 15 the node may send a message for device 2 to increase its barrier time duration as for example described in the 4^{th} implementation. As shown in Fig. 15, loT device can continue sending its data in the two following D2R channel, while loT device 2 wait until its barrier time duration ends. Notably, as shown in Fig. 15, the barrier time duration has been increased.

This implementation facilitates to avoid interrupts between the data transmissions of an loT device and support different traffic priorities of different loT devices.

### Further examples

The above implementations may be extended by the following further examples.

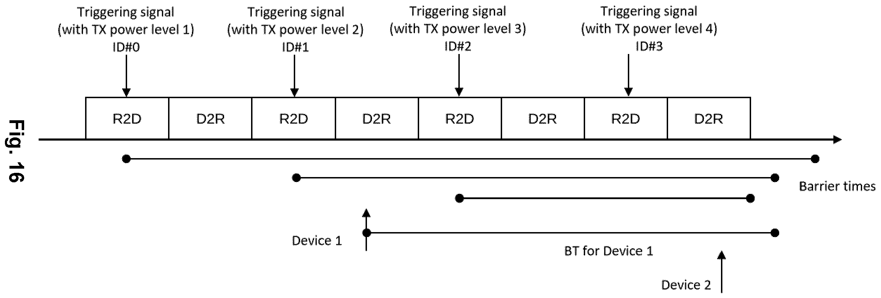

In particular, one example is shown with reference to Fig. 16. Fig 16 is similar to solutions discussed with Figs. 7 and 12. According to the example shown in Fig. 16, each triggering signal comprises an ID number ID#. In this example, the reader sends the triggering signals for the proximity estimation with different power levels. The triggering signals for the proximity estimation are sent with different ID numbers ID#1 to ID#3. Similar to the solution discussed in Fig. 7, the barrier time period depends on a parameter of the received message, here the ID number ID#.

As discussed in with reference to the 2^{nd} implementation, the loT device can be pre-configured or configured with different barrier times. In particular, the barrier time durations can be associated with at least one of a message ID, MCS, band width (BW), number of received triggering signals, and/or power level.

For example, as shown in Fig. 16, the loT devices are configured with 3 different barrier time durations, associated to message IDs (ID#0, ID#1, and ID#2). When a device sends a response to a message/triggering signal, it will apply the associated barrier time, i.e., Device 1 considers the barrier time associated to ID#1 and Device 2 does not apply a barrier time. For example, a longer barrier time is associated for a triggering signal with a lower TX power. For the case the loT device can measure the received signal strength, the barrier time could be defined/selected according to the measured signal strength. This solution facilitates to reduce the overhead for carrying the barrier time or message/triggering type. It also allows to control the traffic load based on the number of devices in the system.

Further examples address the limited power of the loT device. In particular, the barrier timer may be enabled or disabled.

According to an example, not shown in the Figures, the circuitry, in operation, determines based on criterion to enable or disable the barrier timer. In particular, selecting the barrier timer enabled or disabled may be selected by certain messages such as broadcast and/or unicast. Thus, before starting the proximity measurement, all loT devices may enable the barrier timer.

Alternatively or additionally, the circuitry of the loT device determines whether or not to enable or disable the barrier timer based on an loT device criterion.

For example, the loT device criterion can be an loT device criterion for a type of the loT device. For example, the type can indicate that the loT device comprises an additional power storage. In such a situation the barrier timer may be enabled the barrier timer because power can be stored rather than using it for sending redundant messages.

According to a further example, the loT device criterion can be an loT device criterion for a state of the loT device. For example, the state indicating that a power available for the loT device is less than a threshold. In such a situation the barrier timer may be disabled because power for a redundant message is not available and/or power should not be used for processing related to the barrier timer.

According to a further example, the loT device criterion can be an loT device criterion for an indication received from the node. For example, the indication can relate to at least one of a type of the loT device, e.g. an loT device not having an additional power supply, and a state of the loT device that a power available for the loT device is less than a threshold. In such a situation the barrier timer may be disabled because power for a redundant message is not available and/or power should not be used for processing related to the barrier timer.

According to a further example, the loT device criterion can be an loT device criterion for a request of the loT device to the node for disabling the barrier timer. In such a situation the loT device may inform the node that the barrier timer will be disabled because power for a redundant message is not available and/or power should not be used for processing related to the barrier timer.

Further, in view of the limited power, according to limited power, the loT device may be turn off and turn on again. In such a situation, when the device is turned off, after starting the barrier timer, the device restarts the barrier timer after turning on the loT device again. In particular, the loT device resumes the barrier timer at a restored barrier time stored before turning off the loT device. Thus, the energy related to the processing of the barrier timer can be saved. The loT device may inform the node if the loT device restarts or restores the barrier timer or the loT device may receive an instruction to restart or restore the barrier timer. This instruction may be similar to the discussion with exchanging information about the barrier time duration.

### Further implementations

As mentioned above, there may be numerous loT devices communicating with a node. The loT devices may not have the legacy RRC states, ARQ, and HARQ. Therefore, a contention-based channel may be used to initiate communication. However, this could cause excessive attempts for channel access, which may result in collisions and performance degradation. Further, proximity/distance/direction determination might be required for a node. Further, some loT devices have a limited energy capacity. The energy could be obtained from the environment (vibration, light, heat) or a carrier wave, e.g., provided by the gNB/intermediate node. It may implement, e.g. repetitions to increase robustness.

To facilitate the communication considering the mentioned limitations, the loT starts a barrier timer for a barrier time period on the basis of the received message for determining during the barrier time period whether or not sending a response, e.g. to the received massage or a later received massage, to the node.

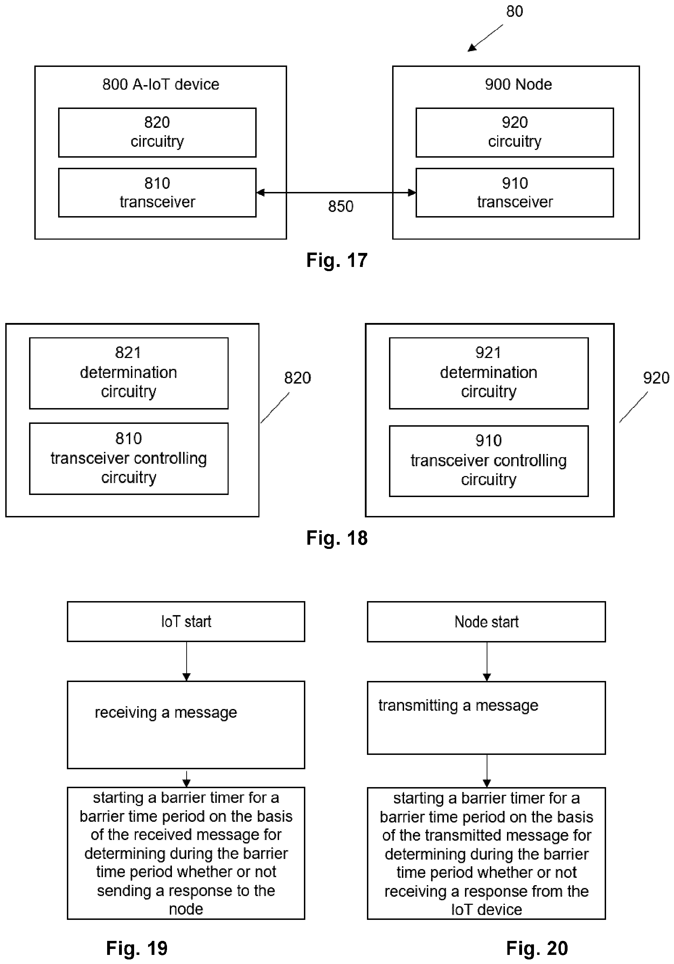

**Fig. 17** illustrates a general, simplified and exemplary block diagram of an loT device 800 and a node (base station or intermediate node connected to a base station) 900 forming a communication system 80. In the following, it is exemplarily assumed that node 900 is a base station functioning as a scheduling device like an eNB or gNB (network node). The loT device 800 may be a wearable, smart home device, automotive device, sensor, smart key, or healthcare device, for example.

The loT device 800 and the base station 900 (eNB/gNB) are communicating with each other over a (wireless) physical channel 850, respectively, using their transceivers 810 (IoT device side) and 910 (base station side). The base station 900 and the loT device 800 are capable of transmitting as well as receiving radio signals via the channel 850. Together, the base station 900 and the loT device 800 form a communication system 80, for example, a 5G or future communication system. The communication system 80 may further include other entities such as further base stations, intermediate nodes and/or loT devices. Any of the above-described embodiments may be implemented in the A-loT device 800, the base station 900 and/or communication system 80 where appropriate.

The loT device 800 comprises a transceiver 810 and a (processing) circuitry 820, and the base station 900 comprises a transceiver 910 and a (processing) circuitry 920. The transceiver 810, 910 in turn comprise and/or function as a receiver and/or a transmitter. In this disclosure, in other words, the term "transceiver" is used for hardware and/or software components that allow the loT device 800, and the base station 900 to transmit and/or receive radio signals over the wireless channel 150, for example, a physical channel. Moreover, the term "circuitry" includes processing circuitry formed by one or more processors or processing units, etc.

The circuitry 820 may perform any determinations and operations described above with respect to the embodiments. The transceiver 810 may transmit and/or receive signals as described with respect to the embodiments. The circuitry 820 may control the transceiver 810 to perform the transmissions and/or receptions.

The circuitry 920 may perform any determinations and operations described above with respect to the embodiments. The transceiver 910 may transmit and/or receive signals as described with respect to the embodiments. The circuitry 920 may control the transceiver 910 to perform the transmissions and/or receptions.

In some embodiments, the transceiver 810 of the loT device 800 receives a message such as a trigger signal. The circuitry 920 of the loT device 800 determines whether or not the loT device 800 starts a barrier timer for a barrier time period on the basis of the received message for determining during the barrier time period whether or not sending a response, e.g. to the received massage or a later received massage, to the node.

In some embodiments, the circuitry 920 of the base station 900 starts a barrier timer for a barrier time period on the basis of the transmitted message for determining during the barrier time period whether or not receiving a response, e.g. to the transmitted massage or a later transmitted massage, from the transceiver 910..

The circuitries may be configured by software to perform the functions as described in any of the above embodiments. As shown in **Fig. 18**, the circuitry 820 of the loT device may further comprise a functional module referred to as determination circuitry 821 for performing the determination. A transceiver controlling circuitry 823 is a functional module that controls the transceiver 810 to receive the message. Moreover, as shown in **Fig. 18**, the circuitry 920 of the base station 900 or an intermediate node may further comprise a functional module referred to as determination circuitry 921 for performing any determinations. A transceiver controlling circuitry 923 is a functional module that controls the transceiver 910 to transmit the message.

A corresponding exemplary method for an loT device comprises the following steps performed by an loT device:
receiving a message from a node, and
starting a barrier timer for a barrier time period on the basis of the received message for determining during the barrier time period whether or not sending a response to the node.

A corresponding sequence diagram for an exemplary loT device behavior in line with the above-discussed loT device and loT device method is in **Fig. 20**.

A corresponding exemplary method for node comprises the following steps performed by a node:
transmitting a message from to an loT device, and
starting a barrier timer for a barrier time period on the basis of the transmitted message for determining during the barrier time period whether or not receiving a response from the loT device.

**Fig. 20** is a signalling diagram of an exemplary and simplified implementation of the improved transmission procedure, illustrating the exchange of messages between the different participating entities (here the loT device and the node) and the steps performed at these entities. The loT behavior and node behavior follow the above described loT device and node and the respective methods.

Moreover, it is noted that the loT device as described in any of the above embodiments and examples, may be integrated on an integrated circuit (IC). Moreover, the integration does not necessary include the entire transceiver. The transceiver is, in general, not necessarily a part of the loT device. The loT may be connected to an external antenna (module) connected to the loT device over a port on the loT device. Similar structure applies to the node.

Moreover, a computer program is provided including code instructions stored on a non-transitory medium, which when executed on one or more processor, causes the one or more processors to execute a method according to any of the above mentioned embodiments and examples.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

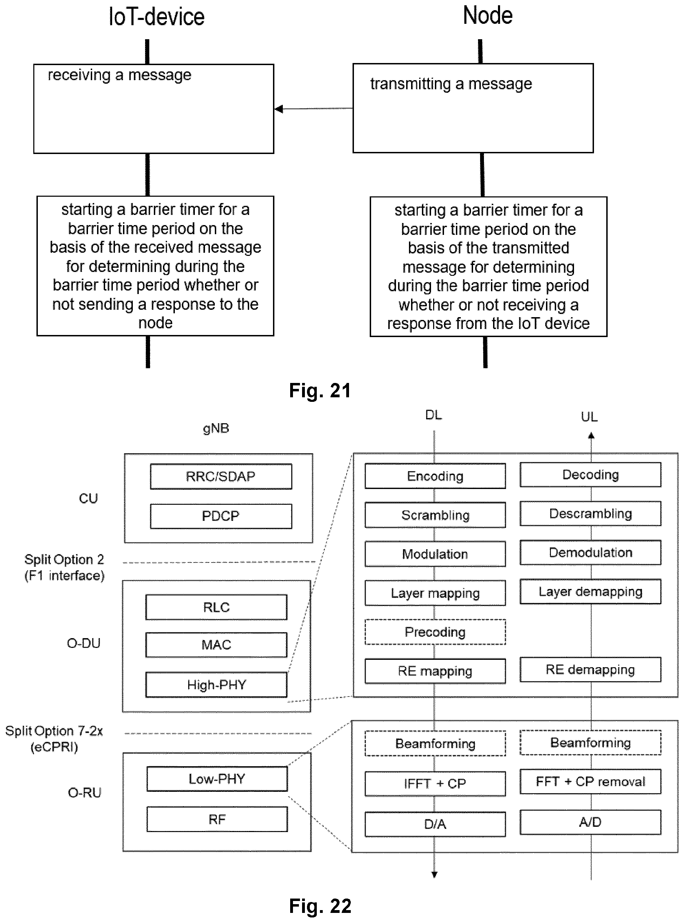

**FIG. 22** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G System; Access and Mobility Management Services; Stage 3 (Release 18)".

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, an Internet of Thing, loT, device is provided that includes the following: a transceiver which, in operation, receives a message from a node, and a circuitry, which in operation, starts a barrier timer for a barrier time period on the basis of the received message for determining during the barrier time period whether or not sending a response to the node.

According to a second aspect provided in addition to the first aspect, the circuitry, in operation, starts the barrier timer in response to at least one of
- receiving the message,
- receiving a plurality of messages, optionally wherein a number of the plurality of messages to start the barrier timer is pre-configured for the loT device or indicated by at least one of the plurality of messages,
- sending a response to the received message or
- sending a plurality of responses to a plurality of received messages, optionally wherein a number of the plurality of responses is pre-configured for the loT device or indicated by at least one of the plurality of messages,
- a beginning time of a channel for communicating data to the node, optionally the beginning time of the channel is determined by the circuitry, in operation, based on a configuration of the loT device or receiving the message, and
- an end time of a channel for communicating data to the node, optionally the end time of the channel is determined by the circuitry, in operation, based on a configuration of the loT device or receiving the message.

According to a third aspect provided in addition to any one of the first to second aspects, the circuitry determines, after starting the barrier timer, based on a not-response criterion whether or not to respond to a later message received, by the transceiver, during the barrier time period.

According to a fourth aspect provided in addition to the third aspect, wherein the not-response criterion is at least one of:
- a not-response criterion for comparing a type of the message and a type of the later message, wherein the type indicates at least one of a message identifier of the message identifying the message, a node identifier of the message identifying the node sending the message, a data type indicating a type of data transmitted by node, a signal strength of the received message,
- a not-response criterion for a number of received messages, and
- a not-response criterion for an indication comprised in the later message; and
the circuitry, in operation, determines to not respond to the later message if comparing the type of the message and the type of the later message, the number of messages received, and/or the indication comprised in the later message meets the not-response criterion.

According to a fifth aspect, provided in addition to any one of the first to fourth aspects, the circuitry determines, after starting the barrier timer, based on a modifying criterion whether or not to modify the barrier time period, wherein the barrier time period is modified by one overriding barrier time period and/or terminating the barrier time period.

According to a sixth aspect, provided in addition to the fifth aspect, the modifying criterion is at least one of:
- a modifying criterion for a type of a later message received, by the transceiver, during the barrier time period, the type indicates at least one of a message identifier of the message identifying the message, a node identifier of the message identifying the node sending the message, a data type indicating a type of data transmitted by the message, a signal strength of the message,
- a modifying criterion for a number of messages received by the transceiver, and
- a modifying condition for an indication comprised in a later message received, by the transceiver, during the barrier time period, and
the circuitry, in operation, determines to modify the barrier timer if the type of the later message, the number of received messages, and/or the indication comprised in the later message meets the modifying criterion.

According to a seventh aspect, provided in addition to any one of the first to sixth aspects, the circuitry, in operation, determines one or more barrier time periods based on at least one of:
- a configuration of the loT device,
- a traffic information received from the node for identifying a communication traffic in a system covered by the node,
- a density information received from the node for identifying a number of loT devices in a system covered by the node,
- an acknowledgement message received, by the loT device, in operation, from the node for acknowledging the response to the message,
- a message identifier of the message identifying the message,
- a node identifier of the message identifying the node sending the message,
- a data type indicating a type of data transmitted by the message,
- a modulation and coding scheme, MCS, used for the message,
- a band width, BW, used for the message,
- number of received messages, and
- a signal strength of the message.

According to an eighth aspect provided in addition to any one of the first to seventh aspects, in operation, determines to start the barrier timer before sending, by the transceiver, in operation, the response to the message.

According to a ninth aspect provided in addition to any one of the first to eighth aspects, the circuitry, in operation, determines not sending during the barrier time period the response to the message based on which the barrier timer starts.

In one optional implementation the circuitry, in operation, determines not sending the response to the message based on which the barrier timer starts,

In one optional implementation, the circuitry determines, based on a later message received, by the transceiver, during the barrier time period, to not send the response to the message based on which the barrier timer starts and/or the response to the later message,

In one optional implementation, the circuitry, in operation, determines to not send the response to the message for starting the barrier timer in case a signal strength of the message for starting the barrier timer is higher than a signal strength of a later message received, by the transceiver, during the barrier time period.

According to a tenth aspect provided in addition to any one of the first to ninth aspects, in case the device is turned off, after starting the barrier timer, the device restarts the barrier timer after turning on the loT device again, optionally wherein the loT device restarts the barrier timer at a restored barrier time stored before turning off the loT device.

According to an eleventh aspect provided in addition to any one of the first to tenth aspects, wherein circuitry, in operation, determines whether or not to enable or disable the barrier timer based on an loT device criterion.

According to a twelfth aspect, provided in addition to the eleventh aspect, the loT device criterion is at least one of:
- an loT device criterion for a type of the loT device, in particular the type indicating that the loT device comprises an additional power storage;
- an loT device criterion for a state of the loT device, in particular the state indicating that a power available for the loT device is less than a threshold;
- an loT device criterion for an indication received from the node, in particular the indication relating to at least one of a type of the loT device not having an additional power supply and a state of the loT device that a power available for the loT device is less than a threshold;
- an loT device criterion for a request of the loT device to the node for disabling the barrier timer;
the circuitry, in operation, enables the barrier timer if the type of the loT device meets loT device criterion, or the circuitry, in operation, disables the barrier timer if the state of the loT device, the indication received from the node, and/or the request of the loT device to the node meets loT device criterion.

According to a thirteenth aspect, provided in addition to any one of the first to twelfth aspects, the message comprises at least one of a trigger signal for a proximity measurement, a trigger signal for a data transmission, a broadcast signal, and a unicast signal, optionally wherein the circuitry, in operation, determines based on the message to enable or disable the barrier timer.

According to a fourteenth aspect a method is provided, the method comprising the following steps performed by an Internet of Thing, loT, device:
receiving a message from a node, and
starting a barrier timer for a barrier time period on the basis of the received message for determining during the barrier time period whether or not sending a response to the node.

According to a fifteenth aspect a node is provide. The node including a transceiver which, in operation, transmits a message to an Internet of Thing, loT, device and a circuitry, which in operation, starts a barrier timer for a barrier time period on the basis of the transmitted message for determining during the barrier time period whether or not receiving a response from the loT device.

## Claims

1. An Internet of Thing, loT, device, comprising:
a transceiver which, in operation, receives a message from a node, and
a circuitry, which in operation, starts a barrier timer for a barrier time period on the basis of the received message for determining during the barrier time period whether or not sending a response to the node.

2. The loT device according to claim 1, wherein the circuitry, in operation, starts the barrier timer in response to at least one of
• receiving the message,
• receiving a plurality of messages, optionally wherein a number of the plurality of messages to start the barrier timer is pre-configured for the loT device or indicated by at least one of the plurality of messages,
• sending a response to the received message or
• sending a plurality of responses to a plurality of received messages, optionally wherein a number of the plurality of responses is pre-configured for the loT device or indicated by at least one of the plurality of messages,
• a beginning time of a channel for communicating data to the node, optionally the beginning time of the channel is determined by the circuitry, in operation, based on a configuration of the loT device or receiving the message, and
• an end time of a channel for communicating data to the node, optionally the end time of the channel is determined by the circuitry, in operation, based on a configuration of the loT device or receiving the message.

3. The loT device according to any of claims 1 to 2, wherein the circuitry determines, after starting the barrier timer, based on a not-response criterion whether or not to respond to a later message received, by the transceiver, during the barrier time period.

4. The loT device according to claim 3, wherein the not-response criterion is at least one of:
• a not-response criterion for comparing a type of the message and a type of the later message, wherein the type indicates at least one of a message identifier of the message identifying the message, a node identifier of the message identifying the node sending the message, a data type indicating a type of data transmitted by node, a signal strength of the received message,
• a not-response criterion for a number of received messages, and
• a not-response criterion for an indication comprised in the later message; and
the circuitry, in operation, determines to not respond to the later message if comparing the type of the message and the type of the later message, the number of messages received, and/or the indication comprised in the later message meets the not-response criterion.

5. The loT device according to any of claims 1 to 4, wherein the circuitry determines, after starting the barrier timer, based on a modifying criterion whether or not to modify the barrier time period, wherein the barrier time period is modified by one overriding barrier time period and/or terminating the barrier time period.

6. The loT device according to claim 5, wherein the modifying criterion is at least one of:
• a modifying criterion for a type of a later message received, by the transceiver, during the barrier time period, the type indicates at least one of a message identifier of the message identifying the message, a node identifier of the message identifying the node sending the message, a data type indicating a type of data transmitted by the message, a signal strength of the message,
• a modifying criterion for a number of messages received by the transceiver, and
• a modifying condition for an indication comprised in a later message received, by the transceiver, during the barrier time period, and
the circuitry, in operation, determines to modify the barrier timer if the type of the later message, the number of received messages, and/or the indication comprised in the later message meets the modifying criterion.

7. The loT device according to any of claims 1 to 6, wherein the circuitry, in operation, determines one or more barrier time periods based on at least one of:
• a configuration of the loT device,
• a traffic information received from the node for identifying a communication traffic in a system covered by the node,
• a density information received from the node for identifying a number of loT devices in a system covered by the node,
• an acknowledgement message received, by the loT device, in operation, from the node for acknowledging the response to the message,
• a message identifier of the message identifying the message,
• a node identifier of the message identifying the node sending the message,
• a data type indicating a type of data transmitted by the message,
• a modulation and coding scheme, MCS, used for the message,
• a band width, BW, used for the message,
• number of received messages, and
• a signal strength of the message.

8. The loT device according to any of claims 1 to 7, wherein the circuitry, in operation, determines to start the barrier timer before sending, by the transceiver, in operation, the response to the message.

9. The loT device according to any of claims 1 to 8, wherein the circuitry, in operation, determines not sending during the barrier time period the response to the message based on which the barrier timer starts,
optionally wherein the circuitry, in operation, determines not sending the response to the message based on which the barrier timer starts,
optionally, wherein the circuitry determines, based on a later message received, by the transceiver, during the barrier time period, to not send the response to the message based on which the barrier timer starts and/or the response to the later message,
optionally wherein the circuitry, in operation, determines to not send the response to the message for starting the barrier timer in case a signal strength of the message for starting the barrier timer is higher than a signal strength of a later message received, by the transceiver, during the barrier time period.

10. The loT device according to any of claims 1 to 9, wherein, in case the device is turned off, after starting the barrier timer, the device restarts the barrier timer after turning on the loT device again, optionally wherein the loT device restarts the barrier timer at a restored barrier time stored before turning off the loT device.

11. The loT device according to any of claims 1 to 10, wherein circuitry, in operation, determines whether or not to enable or disable the barrier timer based on an loT device criterion.

12. The loT device according to claim 11, wherein the loT device criterion is at least one of:
• an loT device criterion for a type of the loT device, in particular the type indicating that the loT device comprises an additional power storage;
• an loT device criterion for a state of the loT device, in particular the state indicating that a power available for the loT device is less than a threshold;
• an loT device criterion for an indication received from the node, in particular the indication relating to at least one of a type of the loT device not having an additional power supply and a state of the loT device that a power available for the loT device is less than a threshold;
• an loT device criterion for a request of the loT device to the node for disabling the barrier timer;
the circuitry, in operation, enables the barrier timer if the type of the loT device meets loT device criterion, or the circuitry, in operation, disables the barrier timer if the state of the loT device, the indication received from the node, and/or the request of the loT device to the node meets loT device criterion.

13. The loT device according to any of claims 1 to 12, wherein the message comprises at least one of a trigger signal for a proximity measurement, a trigger signal for a data transmission, a broadcast signal, and a unicast signal, optionally wherein the circuitry, in operation, determines based on the message to enable or disable the barrier timer.

14. A method comprising the following steps performed by an Internet of Thing, loT, device:
receiving a message from a node, and
starting a barrier timer for a barrier time period on the basis of the received message for determining during the barrier time period whether or not sending a response to the node.

15. A node, comprising
a transceiver which, in operation, transmits a message to an Internet of Thing, loT, device and
a circuitry, which in operation, starts a barrier timer for a barrier time period on the basis of the transmitted message for determining during the barrier time period whether or not receiving a response from the loT device.
